Europäisches Patentamt

European Patent Office

Office européen des brevets

(11) Veröffentlichungsnummer: **0 143 382**
A2

## (12) EUROPÄISCHE PATENTANMELDUNG

(21) Anmeldenummer: **84113579.1**

(51) Int. Cl.⁴: **A 01 M 23/00**

(22) Anmeldetag: **10.11.84**

(30) Priorität: **17.11.83 DE 3341530**

(43) Veröffentlichungstag der Anmeldung: **05.06.85**
**Patentblatt 85/23**

(84) Benannte Vertragsstaaten: **AT BE CH DE FR GB IT LI LU NL SE**

(71) Anmelder: **Allar, Fritz, Erhardt-Kästner-Strasse 26, D-8900 Augsburg (DE)**
Anmelder: **Robl, Frank, Drususstrasse 16, D-8900 Augsburg 21 (DE)**

(72) Erfinder: **Allar, Fritz, Erhardt-Kästner-Strasse 26, D-8900 Augsburg (DE)**
Erfinder: **Robl, Frank, Drususstrasse 16, D-8900 Augsburg 21 (DE)**

(74) Vertreter: **Munk, Ludwig, Dipl.-Ing., Prinzregentenstrasse 1, D-8900 Augsburg (DE)**

(54) **Vogelscheuche für Boote.**

(57) Bei einer Vogelscheuche für unbesetzte Boote mit den Bootskörper (3) überspannenden Schnüren (4) läßt sich dadurch eine einfache und schnelle Handhabung erreichen, daß die Schnüre (4) von bootsseitig lösbar festlegbaren, selbsttätigen Einzugseinrichtungen (6) entgegen der Kraft einer Einzugsfeder abziehbar und mit ihrem in Abziehrichtung vorderen Ende an bootsseitig lösbar festlegbaren Haltern (8) einhängbar sind.

I

## Vogelscheuche für Boote

Die Erfindung betrifft eine Vogelscheuche für unbesetzte Boote mit den Bootskörper überspannenden Abweiselementen.

Die Zahl der Wasservögel und insbesondere der Möwen nimmt ständig zu. Der bevorzugte Ruheplatz derartiger Vögel sind an Bojen liegende Boote. Der scharfe und säurehaltige Kot dieser Vögel stellt eine unerwünschte Verschmutzung von Boot bzw. Persenning dar. Wird dieser Kot nicht innerhalb kurzer Zeit entfernt, so sind Lackschäden bzw. Löcher in der Persenning zu befürchten. Man hat sich bisher zwar schon mit großen Raubvogelattrappen, Windrädern oder dergleichen beholfen. Vogelscheuchen dieser Art haben sich jedoch als nicht wirkungsvoll genug erwiesen. Man hat auch schon über das Boot gespannte Netze verwendet. Die Anbringung und Entfernung derartiger Schutzvorrichtungen hat sich jedoch als sehr aufwendig erwiesen, da bootsseitig keine geeigneten Befestigungs- und Aufnahmemöglichkeiten vorgesehen sind. Es besteht daher die
Gefahr, daß sich die Netze ineinander verhängen bzw.
verheddern.

Hiervon ausgehend ist es daher die Aufgabe der vorliegenden Erfindung unter Vermeidung der Nachteile der bekannten Anordnungen eine einen hohen Abweiseffekt aufweisende Anordnung eingangs erwähnter Art mit bootsseitig
leicht anbringbaren Befestigungs- und Aufnahmeeinrichtungen zu schaffen.

Diese Aufgabe wird erfindungsgemäß gelöst durch den Bootskörper überspannende Schnüre, die von bootsseitig lösbar
festlegbaren, selbsttätigen Einzugseinrichtungen entgegen
der Kraft einer Einzugsfeder abziehbar und mit ihrem in
Abziehrichtung vorderen Ende an bootsseitig lösbar festlegbaren Haltern einhängbar sind.

Diese Maßnahmen ermöglichen sowohl eine einfache und
schnelle Anbringung und Entfernung als auch eine ordentliche und saubere Aufnahme der Schnüre. Infolge der leichten Demontierbarkeit der Einzugseinrichtungen und der
Halter lassen sich aber auch hiervon unter Umständen ausgehende Störungen bei Benutzung des Boots vermeiden. Gleichzeitig ergeben die einen selbsttätigen Schnureinzug gewährleistenden Einzugseinrichtung auch eine hohe Kompaktheit,
was eine leichte Unterbringung im unbenutzten Zustand ermöglicht.

In vorteilhafter Ausgestaltung der übergeordneten Maßnahmen
können die den Schnüren zugeordneten Halter als auf einem
bootsseitig festlegbaren Querträger aufgenommene Ösen ausgebildet sein, an denen jeweils ein am vorderen Ende einer Schnur angeordneter Karabinerhaken einhängbar ist. Diese Maßnahmen ergeben eine einfache Handhabung sowie eine zuverlässige Sicherung gegen selbsttätiges Aushängen. In weiterer Fortbildung der übergeordneten Maßnahmen können die Einzugseinrichtungen auf einem bootsseitig festlegbaren Querträger seitlich verschiebbar aufgenommen sein. Die den Haltern und den Einzugseinrichtungen zugeordneten Querträger lassen sich leicht und einfach handhaben und ergeben somit eine einfache Handhabung sämtlicher hierauf aufgenommener Halter bzw. Einzugseinrichtungen.

In weiterer vorteilhafter Ausgestaltung der übergeordneten Maßnahmen können die den Haltern bzw. Einzugseinrichtungen zugeordneten Querträger an bootsseitig stationär angeordneten Klemmen einspannbar sein. Hierdurch lassen sich die Querträger schnell in und außer Stellung bringen. Bei Segelbooten mit einem durch Wanten verspannten Mast können die Klemmen vorteilhaft an den Wanten festgelegt werden. Hierdurch ist sichergestellt, daß Eingriff in den Bootskörper selbst unterbleiben, was die Montage der Klemmen vereinfacht, so daß auch ein problemloser nachträglicher Einbau möglich ist.

Vorteilhaft können derartige Klemmen jeweils zwei die zugeordnete Wante zwischen sich einspannende Backen aufweisen, von denen einer eine durch zwei Schenkel begrenzte Nut aufweist, deren lichte Weite ungefähr dem Durchmesser des zugeordneten Querträgers entspricht, der mittels einer schenkelseitig vorgesehenen Klemmschraube fixierbar ist. Diese Maßnahmen ermöglichen sowohl eine leichte und problemlose Anbringung der Klemmen selbst aus auch ein leichtes und problemloses In- und Außerstellungbringen der Querträger.

In weiterer vorteilhafter Ausgestaltung der übergeordneten Maßnahmen kann der den Einzugseinrichtungen zugeordnete Querträger etwa auf halbem Abstand zwischen zwei im Bereich der einander gegenüberliegenden Bootsenden angeordneten, mit Haltern versehenen Querträger angeordnet sein. Dies erweist sich insbesondere für lange und in der Mitte eine große Breite aufweisende Boote als sehr zweckmäßig, da hiermit auch die Grundfläche derartiger Boote gut abdeckbar ist. Zweckmäßig können dabei die Einzugseinrichtungen jeweils zwei gegenläufige, jeweils einer Schnur zugeordnete Federrollen aufweisen, so daß von jeder Einzugseinrichtung zwei Schnüre in unterschiedliche Richtungen abgehen können. Hierdurch läßt sich daher auch im Falle einer mittigen Anordnung der Einzugseinrichtungen eine hohe Kompaktheit erreichen.

Weitere zweckmäßige Ausgestaltungen und vorteilhafte Weiterbildungen der übergeordneten Maßnahmen ergeben sich aus der nachstehenden Beschreibung eines bevorzugten Ausführungsbeispiels anhand der Zeichnung in Verbindung mit den restlichen Unteransprüchen.

In der Zeichnung zeigen:

Figur 1     eine Draufsicht auf ein mit Schnüren überspanntes Segelboot,

Figur 2     eine Ansicht eines mit Einzugseinrichtungen versehenen Querträgers,

Figur 3     eine Ansicht eines mit Ösen versehenen Querträgers,

Figur 4     eine Ansicht einer an einer Wante festlegbaren Klemme,

Figur 5     eine Draufsicht auf die Anordnung gemäß Figur 4 und

Figur 6     eine Ansicht einer anderen, an einer Wante festlegbaren Klemme.


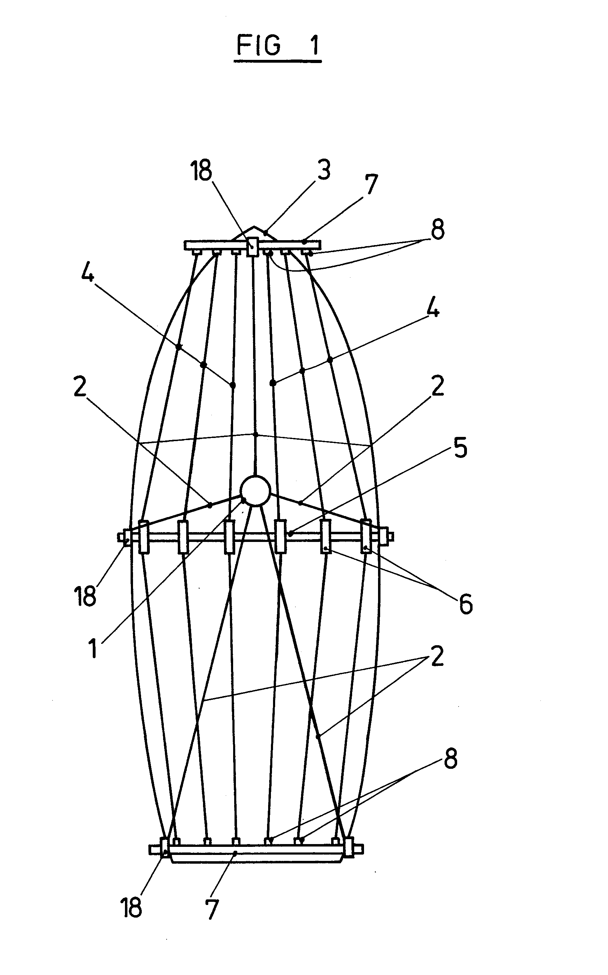

Der Aufbau von Segel-, Ruder- oder Motorbooten ist an sich
bekannt und bedarf daher im vorliegenden Zusammenhang keiner näheren Erläuterung. Bei dem der Figur 1 zugrundeliegenden Boot handelt es sich um ein Segelboot mit einem
Mast 1, der durch Wanten 2 mit dem Bootskörper 3 verspannt
ist, der im unbesetzten Zustand durch eine Persenning abgedeckt ist. Oberhalb der Persenning sind mit Abstand von
dieser angeordnete, den Bootskörper 3 überspannende, hier
in Bootslängsrichtung verlaufende Schnüre 4 vorgesehen,
durch die Möwen oder dergleichen Vögel davon abgehalten
werden, sich auf dem Boot niederzulassen, wenn dieses an
einer Boje liegt. Die Schnüre 4 können als feine Drähte,
Sehnen oder Seile aus Metall und/oder Kunststoff und/oder
Fasermaterial ausgebildet sein.


Den Schnüren 4 sind auf einem Querträger 5 angeordnete
Einzugseinrichtungen 6 zugeordnet, aus denen die Schnüre 4
entgegen einer in Einzugsrichtung wirkenden Kraft ausziehbar sind. Das in Auszugsrichtung vordere Ende der Schnüre
ist in auf einem Querträger 7 angeordnete Halter 8 einhängbar. Bei kürzeren Booten kann der den Einzugseinrichtungen 6 zugeordnete Querträger 5 im Bereich eines Bootsendes und ein den Haltern 8 zugeordneter Querträger 7 im
Bereich des gegenüberliegenden Bootsendes angeordnet sein.
Im dargestellten Ausführungsbeispiel ist der den Einzugseinrichtungen 6 zugeordnete Querträger etwa in der Mitte
zwischen zwei im Bereich der Bootsenden angeordneten, mit
Haltern 8 versehenen Querträgern 7 angeordnet. Die Halter 8
sind gleichmäßig auf die Länge des jeweils zugeordneten
Querträgers 7 verteilt und starr hiermit verbunden. Die
Einzugseinrichtungen 6 können ebenfalls starr mit dem zugeordneten Querträger 5 verbunden sein. Im dargestellten Ausführungsbeispiel sollen die Einzugseinrichtungen 6 seitlich verschiebbar angeordnet sein, so daß sich eine gleichmäßige Verteilung der Schnüre 4 über die jeweils abzudeckende Bootsfläche erzielen läßt.

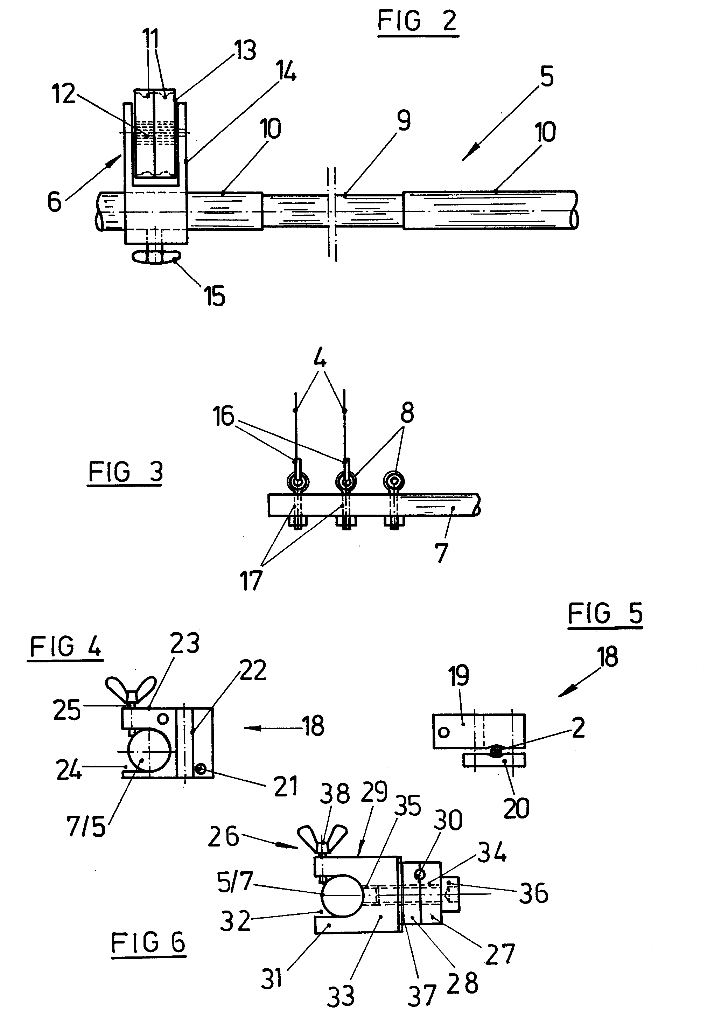

Der den Einzugseinrichtungen 6 zugeordnete Querträger 5 kann, wie Figur 2 am besten erkennen läßt, als Teleskoprohr mit einer mittleren Brücke 9 und seitlich ausfahrbaren Schenkeln 10 ausgebildet sein. Die Brücke 9 ist hier in die seitlichen Schenkel 10 eingesteckt, so daß die Einzugseinrichtungen 6 auch über die schwächere, mittlere Brücke 9 leicht verschoben werden können. Der Verlauf des Querträgers 5 kann an den Verlauf der Bootsoberfläche angepaßt sein. Im dargestellten Ausführungsbeispiel bestehen die Brücke 9 und die seitlichen Schenkel 10 einfach aus geraden Rohrabschnitten. Bei Booten, bei denen sich im mittleren Bereich aufgrund eines am Mast befestigten Großbaums eine Erhöhung ergibt, kann die Brücke 9 zur Anpassung hieran V-förmig ausgebildet sein. Die Einzugseinrichtungen 6 sind mit den zugehörigen Schnüren 4 zugeordneten Rollen 11 versehen, die jeweils mit einer Wickelfeder 12 zusammenwirken, die unter Vorspannung in Einzugsrichtung steht und beim Ausziehen der Schnur weiter aufgezogen wird. Die an den Haltern 8 eingehängten Schnüre 4 werden hierdurch unter Spannung gehalten und, sobald ihr vorderes Ende losgelassen wird, selbsttätig eingezogen. Die den Rollen 11 und den Wickelfedern 12 zugeordneten Gehäuse 13 sind auf gabelförmigen Haltern 14 aufgenommen, die seitlich verschiebbar auf dem Querträger 5 gelagert und durch jeweils eine Fixierschraube 15 hierauf festlegbar sind. Bei Anordnungen mit einem mittleren Querträger 5 für die Einzugseinrichtungen 6 können diese jeweils mit zwei gegenläufig angeordneten Rollen 11 versehen sein, von denen jeweils eine Schnur 4 abziehbar ist, so daß von jeder Einzugseinrichtung jeweils eine Schnur zu den beiden im Bereich der Bootsenden angeordneten Querträgern 7 abgeht. Es wäre aber auch denkbar, hierzu jeweils zwei mit jeweils einer Rolle versehene Einzugseinrichtungen paarweise nebeneinander anzuordnen.

Die dem jeweils vorderen Ende der Schnüre 4 zugeordneten Halter 8 sind, wie am besten aus Figur 3 entnehmbar ist, als Ösen ausgebildet, an denen ein am Ende der zugeordneten Schnur 4 befestigter Karabinerhaken 16 einhängbar ist, was eine zuverlässige und sichere Verbindung gewährleistet. Der den durch Ösen gebildeten Haltern 8 zugeordnete Querträger 7 kann als Leiste oder zweckmäßig ebenfalls als Rohr ausgebildet sein, das mit in gleichmäßigem Abstand nebeneinander angeordneten Bohrungen zur Aufnahme von Ösenschrauben 17 versehen ist.

Die Querträger 5 bzw. 7 und damit die Einzugseinrichtungen 6 und die Halter 8, sind bootsseitig lösbar festlegbar, so daß bei Benutzung des Boots hiervon keine Störung zu erwarten ist. Zur Erleichterung der Montage der Querträger 5 bzw. 7 sind, wie Figur 1 weiter erkennen läßt, bootsseitig stationär angeordnete Klemmen 18 vorgesehen, in welche die Querträger 5 bzw. 7 lösbar einsetzbar sind. Die Klemmen 18 können mit dem Bootskörper 3 verschraubt sein. Im dargestellten, bevorzugten Ausführungsbeispiel sind die Klemmen 18 an den bootsseitigen Enden der Wanten 2 festgelegt. Bei der Montage der Klemmen 18 unterbleibt somit jeder Eingriff in den Bootskörper 3, was eine nachträgliche Montage der Klemmen 18 sehr erleichtert.

Die Klemmen 18 bestehen, wie die Figuren 4 und 5 zeigen, aus zwei die jeweils zugeordnete Wante 2 zwischen sich einklemmenden Backen 19, 20, die durch Klemmschrauben 21 aneinander festlegbar sind und einander zugewandte Rillen 22 mit abgerundetem Querschnitt zur Aufnahme der Wante 2 aufweisen. Der eine Backen 19 ist mit einer quer zur Rille 22 verlaufenden, durch zwei Schenkel 23 begrenzten Nut 24 versehen, in welche der zugeordnete Querträger 5 bzw. 6 einlegbar ist. Die lichte Weite der Nut 24 entspricht dem Durchmesser des Querträgers 5 bzw. 6. Die Tiefe der Nut 24 ist so gewählt, daß der eingelegte Querträger 5 bzw. 7 durch eine in eine schenkelseitige Gewindebohrung einschraubbare Klemmschraube 25 festlegbar ist. Die Klemmschraube 25 ist, wie Figur 4 am besten erkennen läßt, so angeordnet, daß sie im Bereich des nach außen weisenden Umfangsabschnitts des den zugeordneten Querträger 5 bzw. 7 bildenden Rohrs exzentrisch an diesem angreift, wodurch das Rohr in die Nut 24 hineingedrückt wird.

Die der Figur 6 zugrundeliegende Klemme 26 besteht aus zwei, die jeweils zugeordnete Wante zwischen sich aufnehmenden, plattenförmigen Klemmbacken 27, 28 und einem durch ein hiervon separates Bauteil gebildeten Halter 29 zur Aufnahme eines Querträgers 5 bzw. 7. Die plattenförmigen Klemmbacken 27, 28 sind im Bereich der einander zugewandten Flächen mit jeweils einer Rillung 30 versehen, so daß sich ein der jeweils zugeordneten Wante zugeordneter Aufnahmekanal ergibt. Der Halter 29 ist als im Querschnitt U-förmiges Bauteil ausgebildet, dessen seitliche Schenkel 31 eine Nut 32 zum Einlegen des durch eine Stange oder ein Rohr gebildeten Querträgers 5 bzw. 7 begrenzen und dessen die Schenkel 31 miteinander verbindender Steg 33 als Anlage für die von einer Spannschraube 34 durchsetzten Klemmbacken 27, 28 und als Widerlager für die die Klemmbacken 27, 28 durchsetzende Spannschraube 34 dient. Hierzu ist der Steg 33 mit einer zentral angeordneten, schenkelparallelen Gewindebohrung 35 versehen, in welche der Gewindeschaft der Spannschraube 34 eingreift, deren vom Halter 29 abgewandtes Ende sich über einen Kopf 36 an der halterfernen Klemmbacke 27 abstützt.

Durch Festziehen der Spannschraube 34 werden die beiden Klemmbacken 27, 28 zusammengezogen und gemeinsam gegen den Halter 29 gespannt. Hierdurch ergibt sich somit eine zuverlässige Klemmverbindung zwischen den Klemmbacken 27, 28 und einer zwischen diesen aufgenommenen Wante sowie zwischen den Klemmbacken 27, 28 und dem Halter 29. Sobald die Spannschraube 34 gelockert wird, kann der Halter 29 gegenüber den Klemmbacken 27, 28 verdreht werden. Die Spannschraube 34 bildet dabei praktisch die Drehachse. Hierdurch ist es möglich, den Halter 29 und damit den hierin aufgenommenen Querträger 5 bzw. 7 in jeder gewünschten Schwenkstellung gegenüber einer Wante an dieser festzulegen. Dies kann sich vor allem dann vorteilhaft auswirken, wenn der Querträger 7 etwa zur Erzielung eines Seitenschutzes einen einfach geneigten oder einen dachförmig abgebogenen Verlauf aufweist.

Die einander zugewandten Rillen 30 der Klemmbacken 27, 28 verlaufen außerhalb der der Spannschraube 34 zugeordneten, zentral angeordneten Durchgangsbohrung der Klemmbacken 27, 28. Hierdurch ist sichergestellt, daß zum Abnehmen der gesamten Klemme 26 von einer sie aufnehmenden Wante lediglich die Spannschraube 34 etwas gelockert werden muß, jedoch nicht vollständig außer Eingriff mit dem Halter 29 gebracht werden muß.

Normalerweise genügt bereits die Flächenpressung zwischen dem Steg 33 des Halters 29 und der hieran anliegenden Klemmbacke 28, um bei angezogener Spannschraube 34 eine zuverlässige Drehsicherung zu gewährleisten. Es wäre aber auch denkbar, im Bereich der einander anliegenden Flächen von Steg 33 und Klemmbacke 28 zur Gewährleistung einer formschlüssigen Drehsicherung eine Stirnverzahnung 37 vorzusehen.

Die lichte Weite der Nut 32 entspricht dem Durchmesser des Querträgers 5 bzw. 7. Die Tiefe der Nut 32 ist so gewählt, daß der eingelegte Querträger 5 bzw. 7 durch eine in eine schenkelseitige Gewindebohrung einschraubbare Klemmschraube 38 festlegbar ist, die zweckmäßig im Bereich des nach außen weisenden Umfangsabschnitt des zugeordneten Querträgers 5 bzw. 7 angreift und damit den Querträger 5 bzw. 7 in die Nut 32 hineindrückt.

Der den Einzugseinrichtungen 6 zugeordnete, mittlere Querträger 5 und der hintere Querträger 7 können mit beiden Enden durch jeweils eine Klemme 18 bzw. 26 an einer benachbarten Wante 2 befestigt werden. Der vordere Querträger 7 ist mit seinem mittleren Bereich in eine an der bugseitig endenden Wante 2 festlegbare Kelmme 18 bzw. 26 einlegbar.

0143382

Ansprüche

1. Vogelscheuche für unbesetzte Boote mit den Bootskörper (1) überspannenden Abweiselementen, gekennzeichnet durch den Bootskörper (1) überspannende Schnüre (4), die von bootsseitig lösbar festlegbaren, selbsttätigen Einzugseinrichtungen (6) entgegen der Kraft einer Einzugsfeder (12) abziehbar und mit ihrem in Abziehrichtung vorderen Ende an bootsseitig lösbar festlegbaren Haltern (8) einhängbar sind.

2. Vogelscheuche nach Anspruch 1, dadurch gekennzeichnet, daß die Halter (8) als auf einem bootsseitig festlegbaren, als Rohr ausgebildeten Querträger (7) aufgenommene Ösen ausgebildet sind, an denen jeweils ein am vorderen Ende einer Schnur (4) angeordneter Karabinerhaken (16) einhängbar ist.

3. Vogelscheuche nach einem der vorhergehenden Ansprüche 1 bis 2, dadurch gekennzeichnet, daß die Einzugseinrichtungen (6) auf einem bootsseitig festlegbaren, rohrförmigen Querträger (5) seitlich verschiebbar aufgenommen sind.

4. Vogelscheuche nach Anspruch 3, dadurch gekennzeichnet, daß der den Einzugseinrichtungen (6) zugeordnete Querträger (5) etwa auf halbem Abstand zwischen zwei im
Bereich der einander gegenüberliegenden Bootsenden angeordneten, mit Haltern (8) versehenen Querträgern (7)
angeordnet ist.

5. Vogelscbeuch nach einem der vorhergehenden Ansprüche
3 bis 4, dadurch gekennzeichnet, daß zumindest der
den Einzugseinrichtungen (6) zugeordnete Querträger
(5) als Teleskopträger, mit einer mittleren Brücke
(9) und seitlich aufgesteckten Schenkeln (10), ausgebildet ist.

6. Vogelscheuche nach einem der vorhergehenden Ansprüche
2 bis 5, dadurch gekennzeichnet, daß die den Einzugseinrichtungen (6) bzw. den Haltern (8) zugeordneten
Querträger (5 bzw. 7) an bootsseitig stationär angeordneten, im Falle eines mit Wanten (2) versehenen Boots
am bootsseitigen Ende der Wanten (2) festlegbaren Klemmen (18 bzw. 26) einspannbar sind.

7. Vogelscheuche nach Anspruch 6, dadurch gekennzeichnet,
daß die Klemmen (18) zwei die jeweils zugeordnete Wante
(2) zwischen sich einspannende, durch Klemmschrauben
(21) aneinander festlegbare Backen (19 bzw. 20) aufweisen und daß an mindestens einen der Backen (19 bzw.
20) ein Halter angeformt ist, der eine durch zwei
Schenkel (23) begrenzte Nut (24) aufweist, in den ein
Querträger (5 bzw. 7) einlegbar ist.

8. Vogelscheuche nach Anspruch 6, dadurch gekennzeichnet,
daß die Klemmen (26) aus zwei die jeweils zugeordnete Wante zwischen sich einspannenden Klemmbacken (27, 28) und einem hiergegen verdrehbaren, den zugeordneten Querträger (5 bzw. 7) aufnehmenden Halter (29) bestehen, der als im Querschnitt U-förmiges Bauteil ausgebildet ist, dessen seine die dem Querträger (5 bzw. 7) zugeordnete Nut (32) begrenzenden Schenkel (31) miteinander verbindender Steg (33) eine Anlage für die durch eine sie durchsetzende Spannschraube (34) in Stellung haltbaren Klemmbacken (27, 28) und ein Widerlager für die Spannschraube (34) bildet.

9. Vogelscheuche nach einem der vorhergehenden Ansprüche 7 bis 8, dadurch gekennzeichnet, daß der Querträger (5 bzw. 7) im Bereich der jeweils zugeordneten Klemme (18 bzw. 26) mittels einer schenkelseitig vorgesehenen Klemmschraube (25 bzw. 38) fixierbar ist, die im Bereich des nach außen weisenden Umfangsabschnitts des Querträgers (5 bzw. 7) exzentrisch an diesem angreift.

10. Vogelscheuche nach Anspruch 1, dadurch gekennzeichnet, daß die Einzugseinrichtungen (6) mit die zugehörigen Schnüre (4) jeweils aufnehmenden, mit jeweils einer Einzugsfeder (12) zusammenwirkenden Rollen (11) versehen sind.

1/2

0143382

FIG 1

2/2

0143382

FIG 2

FIG 3

FIG 4

FIG 5

FIG 6